# EUROPEAN PATENT SPECIFICATION

(11) **EP 1 655 502 B1**
(45) Date of publication and mention of the grant of the patent: **14.11.2007**
(21) Application number: 05019745.8
(22) Date of filing: 12.09.2005
(51) Int. Cl.: F16D 13/56

(54) **Power transmitting apparatus**
Apparat zur Leistungsübertragung
Appareil de transmission de puissance

(30) Priority: 09.11.2004 JP 2004325288
(43) Date of publication of application: 10.05.2006
(73) Proprietor: KABUSHIKI KAISHA F.C.C., Hamamatsu-shi Shizuoka (JP)
(72) Inventor: Kataoka, Makoto, Hamamatsu-shi Shizuoka (JP); Kashiwagi, Satoru, Hamamatsu-shi Shizuoka (JP); Itou, Shunichi, Hamamatsu-shi Shizuoka (JP)
(74) Representative: Thielmann, Andreas

(56) References cited:
- EP-A- 1 058 018
- EP-A- 1 555 450
- DE-A1- 1 941 683
- PATENT ABSTRACTS OF JAPAN vol. 010, no. 273 (M-518), 17 September 1986 (1986-09-17) & JP 61 096222 A (KAWASAKI HEAVY IND LTD), 14 May 1986 (1986-05-14)
- PATENT ABSTRACTS OF JAPAN vol. 014, no. 395 (M-1016), 27 August 1990 (1990-08-27) & JP 02 150517 A (SUZUKI MOTOR CO LTD), 8 June 1990 (1990-06-08)

## Description

### BACKGROUND OF THE INVENTION

### Field of the Invention

The present invention relates to a power transmitting apparatus for arbitrarily transmitting or cutting-off a rotational force of the input member to or from the output member.

### Description of Background Art

In general, the power transmission apparatus for a vehicle generally uses so-called a multiple disk clutch for arbitrarily transmitting or cutting-off a power of an engine to or from wheels of vehicle. In such a power transmitting apparatus, it has an input member connected to an engine side, an output member connected to driven, and a clutch member connected to the output member, and the power can be transmitted by pressure-contacting a plurality of driving clutch plates mounted on the input member and a plurality of driven clutch plates mounted on the clutch member and can be cut-off by releasing the pressure-contacting force between the driving and driven clutch plates.

It is disclosed in a prior art (e.g. European Laid-open Patent Specification No. 1058018) a technology of providing cams for adding a pressure-contact assisting function to improve the pressure-contacting force of both driving and driven clutch plates during power transmission as well as a back-torque limiting function to release the clutch plates of input and output sides when the rotation speed of the output member has exceeded that of the input member. According to the power transmitting apparatus of this prior art, two cams are formed by providing gradient on each engaging surface of a clutch housing and a driving clutch plate so that both the driving and driven clutch plates are strongly pressure-contacted by one pair of cams (pressure-contact assisting cams) during the normal power transmission and on the contrary the driving clutch plates are moved by the other pair of cams (back-torque limiting cams) toward a direction in which the pressure-contact between the driving and driven clutch plates are released when the back-torque is caused.

However in the power transmitting apparatus of the prior art, since the gradient angles of the two cams (pressure-contact assisting cams and back-torque limiting cams) are set same each other, a problem described below is caused. That is, in order to firmly avoid troubles (e.g. locking of wheel) due to the back-torque, it is preferable to set the gradient angle of the back-torque limiting cams as large as possible so as to separate the driving clutch plates and the driven clutch plates away from each other as much as possible. Meanwhile, if the gradient angle of the pressure-contact assisting cams is set large, cam surfaces of the pressure-contact assisting cams and back-torque limiting cams are bit each other due to the "wedge effect" and thus the driving force cut-off operation could not be well done. In addition, if the gradient angle of the pressure-contact assisting cams is set too large, the bearing pressure between the driving and driven clutch plates would be remarkably different from that originally set at designed time and thus the operability would be also reduced.

### SUMMARY OF THE INVENTION

It is, therefore, an object of the present invention to provide a power transmitting apparatus which can firmly avoid the problem mentioned above and thus can always well perform the driving force cut-off operation.

### [Means for achieving the object]

For achieving the object of the present invention above, there is provided, according to claim 1, a power transmitting apparatus comprising a clutch housing rotatable together with an input member and having a plurality of driving clutch plates; and a clutch member connected to an output member and having a plurality of driven clutch plates alternately arranged between the driving clutch plates of the clutch housing; in which a rotational force inputted to the input member can be transmitted to or cut-off from the output member via pressure-contact or release between the driving clutch plates and driven clutch plates characterized in that the clutch member is provided with pressure-contact assisting cams for increasing the pressure-contacting force between the driving clutch plates and driven clutch plates when a condition of permission of transmission of the rotational force inputted to the input member to the output member is achieved, and provided with a back-torque limiting cams for releasing the connection between the driving clutch plates and the driven clutch plates when the rotation speed of the output member has exceeded that of the input member, and that the gradient angle of the back-torque limiting cams is formed larger than the gradient angle of the pressure-contact assisting cams.

According to claim 2, there is provided a power transmitting apparatus of claim 1 further comprising a pressure plate mounted on the clutch member and moveable in an axial direction of the clutch member for carrying out the pressure-contact or release of the driving clutch plates and the driven clutch plates via the axial movement of the pressure plate relative to the clutch member; and stopper portions projected toward the clutch member from the pressure plate and fitted in recesses formed on the inner circumferential surface of the clutch member for limiting the rotation of the pressure plate relative to the clutch member; wherein said pressure-contact assisting cams and the back-torque limiting cams are formed on the recesses of the clutch member and on the stopper portions of the pressure plate.

### [Effects of the invention]

According to the present invention of claim 1, since the gradient angle of the back-torque limiting cams is formed larger than the gradient angle of the pressure-contact assisting cams, it is possible to firmly avoid the problem mentioned above and thus to always well perform the driving force cut-off operation.

According to the present invention of claim 2, since the pressure-contact assisting cams and the back-torque limiting cams are formed by the recesses formed on the clutch member and the stopper portions which are conventionally provided also in the power transmitting apparatus of the prior art, no additional parts are required for achieving the present invention and thus manufacturing cost, number of parts, and structure of the power transmitting apparatus can be reduced.

### BRIEF DESCRIPTION OF THE DRAWINGS

Additional advantages and features of the present invention will become apparent from the subsequent description and the appended claims, taken in conjunction with the accompanying drawings, wherein:
Fig. 1 is a longitudinal section view of a power transmitting apparatus of the present invention; and
Fig. 2 is a schematic view showing a region near the stopper portions and recesses taken from a direction of an arrow A in Fig. 1.

### DESCRIPTION OF THE PREFERRED EMBODIMENTS

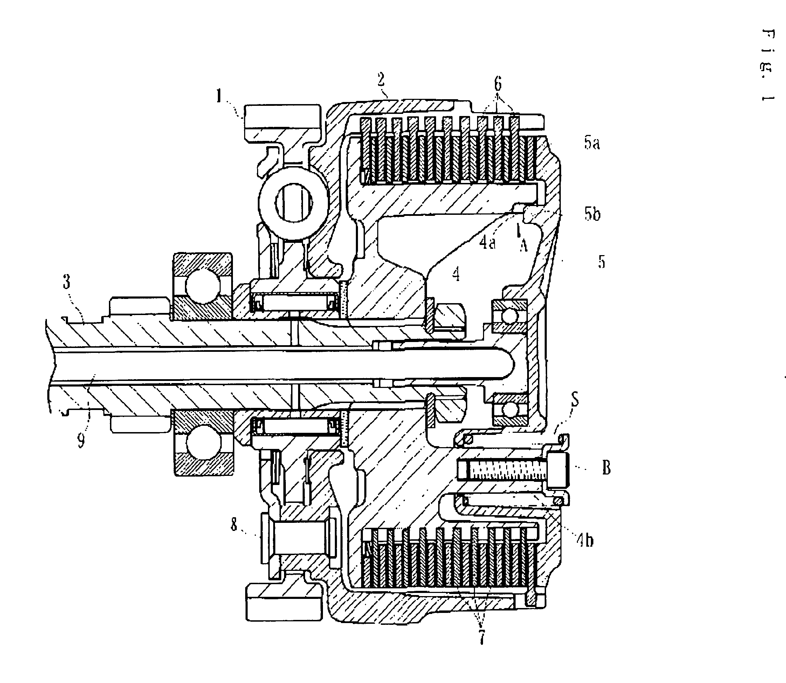

A preferred embodiment of the present invention will be hereinafter described with reference to accompanied drawings.
A power transmitting apparatus of a first embodiment of the present invention is mounted on a vehicle or motorcycle arbitrarily transmit or cut-off the driving force of an engine and transmission to or from front wheels. As shown in Fig. 1, the power transmitting apparatus of the present invention comprises a clutch housing 2 on which a gear 1 as an input member is mounted, a clutch member 4 connected to a shaft 3 as an output member, a pressure plate 5 mounted on the clutch member 4 at the right end (in view of Fig. 1) thereof, driving clutch plates 6 connected to the clutch housing 2, and driven clutch plates 7 connected to the clutch member 4.

The gear 1 is rotated around the shaft 3 by a driving force (rotational force) transmitted from the engine and connected to the clutch housing 2 via rivets 8 etc. The clutch housing 2 is a cylindrical casing member opened at the right end thereof and provided with a plurality of driving clutch plates 6 on the inner circumferential surface thereof. Each of the driving clutch plates 6 is formed as a substantially annular plate member and rotated together with the clutch housing 2.

The clutch 4 is formed as a cylindrical casing member opened at the right end thereof and adapted to be received within the clutch housing 2. The shaft 3 passes through the center of the clutch member 4 and is connected thereto via a spline connection and thus is rotated by the clutch member 4. Axially extending splines are formed on the outer circumferential surface of the clutch member 4 and the driven clutch plates 7 are fitted on the splines.

These driven clutch plates 7 are arranged alternately arranged with the driving clutch plates 6 so that clutch plates 6 and 7 adjacent each other can be pressure-contacted or released. That is, both clutch plates 6 and 7 are allowed to be slid axially of the clutch member 4 and thus pressure-contacted each other when pushed by the pressure plate 5 toward a left direction (in view of Fig.
1) so that the rotational force can be transmitted to the clutch member 4 and the shaft 3. When releasing the pressure of the pressure plate 5, they are also released each other and the clutch member 4 cannot follow the rotation of the clutch housing 2 and is stopped so that no power cannot be transmitted to the shaft 3.

In this case, it should be noted that "release" of the clutch plates 6 and 7 means a condition in which the pressure-contact is lost and thus the clutch member 4 does not follow the rotation of the clutch housing 2 (i.e. a condition in which the driving clutch plates 6 slide on the driven clutch plates 7) and thus it is out of the question whether there is any clearance between the clutch plates 6 and 7.

The pressure plate 5 has a substantially disc configuration such as closing the opening (the right end) of the clutch member 4 and is normally urged toward a left direction by the clutch spring S. That is, the urging of the pressure plate 5 is achieved by the clutch spring S arranged between a boss portion 4b projected from the clutch member 4 and extending through the pressure plate 5 and a head of a clutch bolt B screwed in the boss portion 4b.

Thus the circumferential edge portion 5a of the pressure plate 5 abuts the clutch plate 7 positioned at most right position and the clutch plates 6 and 7 are normally pressure-contacted each other by the clutch spring S. Accordingly, the clutch housing 2 and the clutch member 4 are kept in a normally connected condition so that the gear 1 can rotate the shaft 3 when the rotational force is inputted to the gear 1.

The pressure-contact force between the driving and driven clutch plates 6 and 7 can be released when a driver of vehicle operates to move a push rod 9 toward a right direction (in view of Fig. 1) so as to move the pressure plate 5 toward a right direction against the urging force of the clutch spring S. When the pressure-contacting force between the driving and driven clutch plates 6 and 7 is released, the rotational force inputted to the gear 1 and the clutch housing 2 is cut-off and thus not transmitted to the shaft 3. That is, the pressure-contact or the release between the plates 6 and 7 can be achieved by the axial movement of the push rod 9 and accordingly the pressure plate 5.

The pressure plate 5 is formed with several stopper portions 5b projected therefrom for limit rotation of the pressure plate 5 relative to the clutch member 4. Each stopper portion 5b has a projected configuration and is fitted in a recess 4a formed on the inner circumferential surface of the clutch member 4 to limit the relative rotation between the pressure plate 5 and the clutch member 4.

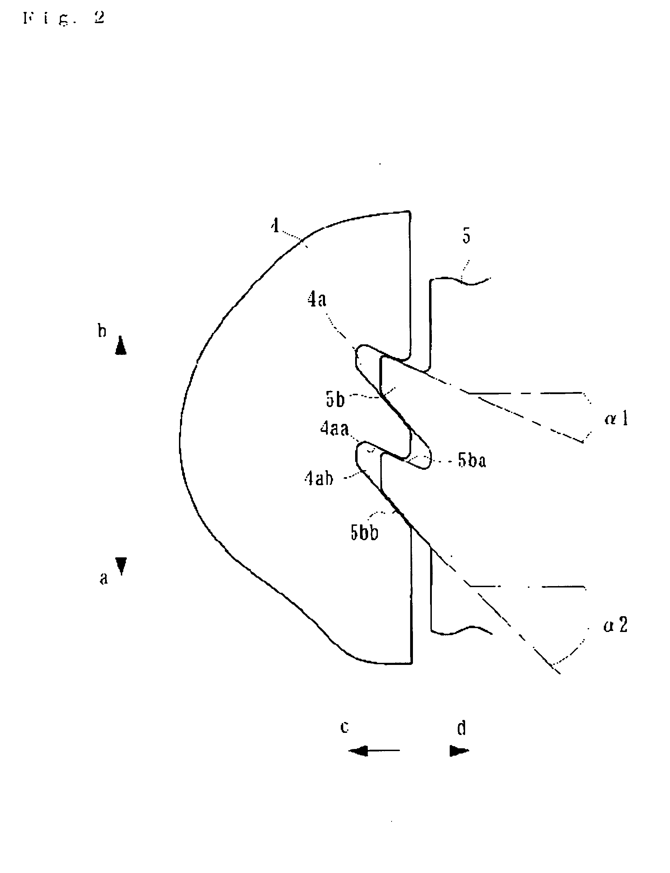

Referring to Fig. 2, the stopper portions 5b of the pressure plate 5 is formed with cam surfaces 5ba each having a gradient angle α 1 and cam surfaces 5bb each having a gradient angle α 2, on the other hand the recesses 4a of the clutch member 4 is formed with cam surfaces 4aa each having a gradient angle α 1 and cam surfaces 4ab each having a gradient angle α 2. Each of these gradient angles is defined as an angle of each cam surface measured relative to a horizontal line (direction of the axis of the clutch member 4 and the pressure plate 5) and the gradient angle α 2 is set to be larger than the gradient angle α 1 (e.g. α 1: about 25°and α 2: about 50°).

It is arranged that each pair of mutually contacting cam surfaces 5ba and 4aa forms the pressure-contact assisting cam and other pair of mutually contacting cam surfaces 5bb and 4ab forms the back-torque limiting cam. That is, when the rotational force inputted to the gear 1 and the clutch housing 2 is transmitted to the shaft 3 via the clutch member 4, the rotational force of a direction shown by an arrow "a" in Fig. 2 is applied to the clutch member 4. Accordingly the pressure plate 5 is moved toward a direction shown by an arrow "c" by the camming action of pressure-contact assisting cams and thus the pressure-contact force between the driving and driven clutch plates 6 and 7 can be increased.

On the other hand, when the back-torque is caused in a direction shown by an arrow "b" if the rotation speed of the shaft 3 exceeds that of the gear 1 and the clutch housing 2, the pressure plate 5 is moved toward a direction shown by an arrow "d" and thus the driving and driven clutch plates 6 and 7 are released. Thus troubles of the power transmitting apparatus or power unit (e.g. an engine) which would be caused by the back-torque can be avoided.

Since the gradient angle α 2 of the back-torque limiting cams pair 4ab and 5bb is formed larger than the gradient angle α 1 of the pressure-contact assisting cam pair 4aa and 5ba, it is possible to set so that the shift in direction "d" of the pressure plate 5 (function as a back-torque limiter) is larger than the shift in direction "c" of the pressure plate 5 (function as a pressure-contact assist). Thus it becomes possible to firmly avoid the trouble caused by the back-torque and to always well perform the driving force cut-off operation of the clutch because of less generation of so-called a wedge effect.

According to the present invention, since the pressure-contact assisting cams or the back-torque limiting cams are arranged respectively at the recesses 4a on the inner circumferential wall of the clutch member 4 and the stopper portions 5b, it is possible to reduce the surface pressure applied to the cam surfaces and thus to avoid the excessive load which would be otherwise applied thereto as compared with the prior art in which cam members having such function are arranged near the shaft 3. Accordingly, it is possible to eliminate any new additional part made for example of forged member and thus to reduce the manufacturing cost, the number of the parts. In addition, it is possible to reduce the size of the power transmitting apparatus in view of its transmissible torque (i.e. a ratio of size/transmissible torque).

According to the power transmitting apparatus of the present invention, it is possible to obtain the pressure-contact assisting function and the back-torque limiting function only by changing the configuration of stopper portions and the recess for receiving the stopper portions of the prior art. Furthermore, since the stopper portions of the prior art also exhibit a function of preventing rotation of the pressure plate 5 and thus the stopper portions are made as having a relatively high rigidity, no other process for increasing the rigidity is required. Accordingly, the present invention can be easily applied to the power transmitting apparatus of the

### prior art.

In addition, it is preferable, to improve the wear resistance and the durability, to provide a surface treatment on the cam surfaces 5bb and 4ab forming the pressure-contact assisting cams and cam surfaces 5ba and 4aa forming the back-torque limiting cams. The surface treatment may include chrome plating and anode oxide coating etc. Such a surface treatment can improve slidability of the cam surfaces to achieve a good camming action as well as can prevent generation of abrasion on the cam surfaces to extend the life of the power transmitting apparatus.

Although it may be possible to provide the surface treatment whole the clutch member 4 and the pressure plate 5, the surface treatment only on the cam surfaces may be sufficient. Also, the surface treatment may be provided either one of the pressure-contact assisting cams or the back-torque limiting cams.

Although the present invention has been described with reference to the preferred embodiment, the present invention is not limited to the illustrated explanations. For example the present invention can be applied to an arrangement in which the pressure-contact assisting cams and the back-torque limiting cams are formed on other parts than the clutch member and the pressure plate (such as e.g. positions between the clutch housing and the driving clutch plates or between the clutch member and the driven clutch plates etc.) so long as it is so constructed that the gradient angle of the back-torque limiting cams is larger than that of the pressure-contact assisting cams. The power transmitting apparatus of the present invention can be applied to a power transmitting apparatus of multiple disc clutch type used for a three or four wheeled buggy, machines for multiple use other than for a motorcycle.

### [Applicability in industry]

The power transmitting apparatus of the present invention can be applied to those having different outline configurations or additional functions if they are those having pressure-contact assisting cams and back-torque limiting cams as well as having a gradient angle of the back-torque limiting cams larger than that of the pressure-contact assisting cams.

## Claims

1. A power transmitting apparatus comprising a clutch housing (2) rotatable together with an input member (1) and having a plurality of driving clutch plates (6); and a clutch member (4) connected to an output member (3) and having a plurality of driven clutch plates (7) alternately arranged between the driving clutch plates (6) of the clutch housing (2); in which a rotational force inputted to the input member (1) can be transmitted to or cut-off from the output member (3) via pressure-contact or release between the driving clutch plates (6) and driven clutch plates (7) **CHARACTERIZED in that** the clutch member (4) is provided with pressure-contact assisting cams (4aa and 5ba) for increasing the pressure-contacting force between the driving clutch plates (6) and driven clutch plates (7) when a condition of permission of transmission of the rotational force inputted to the input member (1) to the output member (3) is achieved, and provided with back-torque limiting cams (4ab, 5bb) for releasing the connection between the driving clutch plates (6) and the driven clutch plates (7) when the rotation speed of the output member (3) has exceeded that of the input member (1), and that the gradient angle (α 2) of the back-torque limiting cams (4ab, 5bb) is formed larger than the gradient angle (α 1) of the pressure-contact assisting cams (4aa, 5ba).

2. A power transmitting apparatus of claim 1 further comprising a pressure plate (5) mounted on the clutch member (4) and moveable in an axial direction of the clutch member (4) for carrying out the pressure-contact or release of the driving clutch plates (6) and the driven clutch plates (7) via the axial movement of the pressure plate (5) relative to the clutch member (4); and stopper portions (5b) projected toward the clutch member (4) from the pressure plate (5) and fitted in recesses (4a) formed on the inner circumferential surface of the clutch member (4) for limiting the rotation of the pressure plate (5) relative to the clutch member (4); wherein said pressure-contact assisting cams (4aa, 5ba) and the back-torque limiting cams (4ab, 5bb) are formed on the recesses (4a) of the clutch member (4) and on the stopper portions (5b) of the pressure plate (5).

3. A power transmitting apparatus of claim 2 wherein; the gradient angle (α2) of the back-torque limiting cams (4ab, 5bb) from a direction of the axis of the clutch member (4) and the pressure plate (5) is set to be about 50°and the gradient angle (α1) of the pressure-contact assisting cams (4aa, 5ba) from a direction of the axis of clutch member (4) and the pressure plate (5) is set to be about 25°.

4. A power transmitting apparatus of claim 1 wherein; a surface treatment is provided on the cam surfaces (5bb, 4ab) forming the pressure-contact assisting cams and cam surfaces 5ba and 4aa forming the back-torque limiting cams in order to improve the wear resistance and the durability.

5. A power transmitting apparatus of claim 4 wherein; the surface treatment may include chrome plating and anode oxide coating or the like.

## Patentansprüche

1. Leistungsübertragungsvorrichtung, umfassend ein Kupplungsgehäuse (2), das zusammen mit einem Antriebselement (1) drehbar ist und mehrere Antriebskupplungsscheiben (6) aufweist; und ein Kupplungsglied (4), das mit einem Abtriebselement (3) verbunden ist und mehrere angetriebene Kupplungsscheiben (7) aufweist, die abwechselnd zwischen den Antriebskupplungsscheiben (6) des Kupplungsgehäuses (2) angeordnet sind; wobei eine Drehkraft, die dem Antriebselement (1) zugeführt ist, über Druckkontakt oder Freigabe zwischen den Antriebskupplungsscheiben (6) und angetriebenen Kupplungsscheiben (7) auf das Abtriebselement (3) übertragen oder davon getrennt sein kann, **dadurch gekennzeichnet, dass** das Kupplungsglied (4) mit druckkontakt fördernden Nocken (4aa und 5ba) zum Erhöhen der Druckkontaktkraft zwischen den Antriebskupplungsscheiben (6) und den angetriebenen Kupplungsscheiben (7) versehen ist, wenn eine Übertragungsgenehmigungsbedingung der Drehkraft, die dem Antriebselement (1) dem Abtriebselement (3) zugeführt ist, erzielt ist, und mit rückdrehmomentbegrenzenden Nocken (4ab, 5bb) zum Freigeben der Verbindung zwischen den Antriebskupplungsscheiben (6) und den angetriebenen Kupplungsscheiben (7) versehen ist, wenn die Drehgeschwindigkeit des Abtriebselements (3) die des Antriebselements (1) überschritten hat, und dass der Steigungswinkel (α2) der rückdrehmomentbegrenzenden Nocken (4ab, 5bb) größer als der Steigungswinkel (α1) der druckkontaktfördernden Nocken (4aa, 5ba) ausgebildet ist.

2. Leistungsübertragungsvorrichtung nach Anspruch 1, ferner umfassend eine Druckplatte (5), die an dem Kupplungsglied (4) angebracht ist und in einer axialen Richtung des Kupplungsglieds (4) zum Ausführen des Druckkontakts oder der Freigabe der Antriebskupplungsscheiben (6) und der angetriebenen Kupplungsscheiben (7) über die axiale Verschiebung der Druckplatte (5) bezüglich des Kupplungsglieds (4) verschiebbar ist; und Anschlagabschnitte (5b), die von der Druckplatte (5) zu dem Kupplungsglied (4) hin vorragen und in Aussparungen (4a), die an der inneren Umfangsfläche des Kupplungsglieds (4) ausgebildet sind, zum Begrenzen der Drehung der Druckplatte (5) bezüglich des Kupplungsglieds (4) eingepasst sind; wobei die druckkontaktfördernden Nocken (4aa, 5ba) und die rückdrehmomentbegrenzenden Nocken (4ab, 5bb) an den Aussparungen (4a) des Kupplungsglieds (4) und an den Anschlagabschnitten (5b) der Druckplatte (5) ausgebildet sind.

3. Leistungsübertragungsvorrichtung nach Anspruch 2, wobei der Steigungswinkel (α2) der rückdrehmomentbegrenzenden Nocken (4ab, 5bb) aus einer Richtung der Achse des Kupplungsglieds (4) und der Druckplatte (5) auf ungefähr 50° eingestellt ist und der Steigungswinkel (α1) der druckkontakttördernden Nocken (4aa, 5ba) aus einer Richtung der Achse des Kupplungsglieds (4) und der Druckplatte (5) auf ungefähr 25° eingestellt ist.

4. Leistungsübertragungsvorrichtung nach Anspruch 1, wobei eine Oberflächenbehandlung der Nockenoberflächen (5bb, 5ab), die die druckkontakt fördernden Nocken ausbilden, und der Nockenoberflächen (5ba, 4aa), die die rückdrehmomentbegrenzenden Nocken ausbilden, zum Verbessern des Verschleißwiderstands und der Strapazierfähigkeit vorgesehen ist.

5. Leistungsübertragungsvorrichtung nach Anspruch 4, wobei die Oberflächenbehandlung Verchromung und Anodenoxidbeschichtung und dergleichen beinhalten kann.

## Revendications

1. Appareil de transmission de puissance comprenant un carter d'embrayage (2) capable de tourner avec un élément d'entrée (1) et ayant une pluralité de disques d'embrayage d'entraînement (6); et un élément d'embrayage (4) relié à un élément de sortie (3) et ayant une pluralité de disques d'embrayage entraînés (7) agencés de façon alternative entre les disques d'embrayage d'entraînement (6) du carter d'embrayage (2) ; dans lequel une force de rotation transmise à l'élément d'entrée (1) peut être transmise à ou coupée de l'élément de sortie (3) via contact par pression ou libération entre les disques d'embrayage d'entraînement (6) et les disques d'embrayage entraînés (7) **caractérisé en ce que** l'élément d'embrayage (4) est pourvu de cames d'aide à contact par pression (4aa et 5ba) pour augmenter la force de contact par pression entre les disques d'embrayage d'entraînement (6) et les disques d'embrayage entraînés (7) lorsqu'une condition d'autorisation de transmission de la force rotative transmise à l'élément d'entrée (1) vers l'élément de sortie (3) est réalisée, et pourvu de cames de limitation de couple arrière (4ab, 5bb) pour libérer la connexion entre les disques d'embrayage d'entraînement (6) et les disques d'embrayage entraînés (7) lorsque la vitesse de rotation de l'élément de sortie (3) a dépassé celle de l'élément d'entrée (1), et **en ce que** l'angle de gradient (α2) des cames de limitation de couple arrière (4ab, 5bb) est supérieur à l'angle de gradient (α1) des cames d'aide à contact par pression (4aa, 5ba).

2. Appareil de transmission de puissance selon la revendication 1 comprenant en outre un plateau de pression (5) monté sur l'élément d'embrayage (4) et mobile dans une direction axiale de l'élément d'embrayage (4) pour réaliser le contact par pression ou la libération des disques d'embrayage d'entraînement (6) et des disques d'embrayage entraînés (7) via le mouvement axial du plateau de pression (5) par rapport à l'élément d'embrayage (4) ; et les parties de butée (5b) en saillie vers l'élément d'embrayage (4) depuis le plateau de pression (5) et placées dans des évidements (4a) formés sur la surface circonférentielle intérieure de l'élément d'embrayage (4) pour limiter la rotation du plateau de pression (5) par rapport à l'élément d'embrayage (4) ; dans lequel lesdites cames d'aide à contact par pression (4aa, 5ba) et les cames de limitation de couple arrière (4ab, 5bb) sont formées sur les évidements (4a) de l'élément d'embrayage (4) et sur les parties de butée (5b) du plateau de pression (5).

3. Appareil de transmission de puissance selon la revendication 2 dans lequel l'angle de gradient (α2) des cames de limitation de couple arrière (4ab, 5bb) depuis une direction de l'axe de l'élément d'embrayage (4) et le plateau de pression (5) est réglé pour être à environ 50° et l'angle de gradient (α1) des cames d'aide à contact par pression (4aa, 5ba) d'une direction de l'axe de l'élément d'embrayage (4) et du plateau de pression (5) est réglé pour être à environ 25°.

4. Appareil de transmission de puissance selon la revendication 1 dans lequel un traitement de surface est prévu sur les surfaces de came (5bb, 4ab) formant les cames d'aide à contact par pression et sur les surfaces de came 5ba et 4aa formant les cames de limitation de couple arrière afin d'améliorer la résistance à l'usure et la durabilité.

5. Appareil de transmission de puissance selon la revendication 4 dans lequel le traitement de surface peut comprendre un placage de chrome et un revêtement d'oxyde d'anode ou similaire.
